(19) Europäisches Patentamt
European Patent Office
Office européen des brevets

(11) **EP 3 936 912 A1**

(12) **DEMANDE DE BREVET EUROPEEN**

(43) Date de publication:
**12.01.2022 Bulletin 2022/02**

(51) Int Cl.:
***G02B 6/12*** *(2006.01)*     ***G02B 6/125*** *(2006.01)*
***G02B 6/293*** *(2006.01)*     *G02B 6/34* *(2006.01)*

(21) Numéro de dépôt: **21183925.3**

(22) Date de dépôt: **06.07.2021**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **07.07.2020 FR 2007180**

(71) Demandeur: **Commissariat à l'énergie atomique et aux énergies alternatives**
**75015 Paris (FR)**

(72) Inventeurs:
• **MONPEURT, Cyrielle**
 **38054 GRENOBLE CEDEX 09 (FR)**
• **BOUTAMI, Salim**
 **38054 GRENOBLE CEDEX 09 (FR)**

(74) Mandataire: **Brevalex**
 **95, rue d'Amsterdam**
 **75378 Paris Cedex 8 (FR)**

(54) **DISPOSITIF DE DÉMULTIPLEXAGE EN LONGUEUR D'ONDE NOTAMMENT POUR UN DÉMULTIPLEXAGE HORS PLAN**

(57) Dispositif de démultiplexage en longueur d'onde (100) configuré pour, en utilisation, répartir spatialement les contributions spectrales d'un faisceau lumineux incident, et qui comporte un guide d'onde linéaire (110) et un guide d'onde planaire (130), formés coplanaires et aptes à être couplés optiquement l'un à l'autre le long d'une ligne de couplage (13), par couplage évanescent. Une distance (D(l)) entre le guide d'onde linéaire et le guide d'onde planaire varie de manière décroissante, le long de la ligne de couplage et dans le sens de propagation de la lumière dans le guide d'onde linéaire en utilisation.

Un tel dispositif peut comprendre en outre des réseaux de diffraction situés dans le guide d'onde planaire, pour extraire la lumière hors de ce dernier.

FIG.1A

EP 3 936 912 A1

**Description**

**DOMAINE TECHNIQUE**

L'invention se rapporte à un dispositif de démultiplexage en longueur d'onde, pour séparer spatialement les contributions spectrales d'un faisceau lumineux incident.

**ÉTAT DE LA TECHNIQUE ANTÉRIEURE**

On connaît dans l'art antérieur différents exemples de démultiplexeurs en longueurs d'onde. On peut citer par exemple les démultiplexeurs à réseau de guides d'onde, ou AWG (pour l'anglais « Arrayed Waveguide Grating »), avec un ensemble de guides d'onde de longueurs différentes apte à créer un déphasage incrémental et un guide d'onde planaire au sein duquel la lumière se recombine par interférences constructives. On peut également citer les démultiplexeurs à réseau de diffraction en réflexion, ou PCG (pour l'anglais « Planar Concave Waveguide »), avec un guide d'onde planaire bordé par un réseau de diffraction en réflexion. Enfin, dans un démultiplexeur à réseau d'anneaux résonnants, un guide d'onde principal est couplé à des guides d'onde secondaires par des séries respectives d'anneaux résonnants, pour répartir les différentes longueurs d'onde sur les différents guides d'onde secondaires.

Un objectif de la présente invention est de proposer une solution alternative de démultiplexage en longueur d'onde, et apte à réaliser un démultiplexage en longueur d'onde d'un faisceau lumineux dans l'infrarouge.

Un autre objectif de la présente invention est de proposer un dispositif de démultiplexage en longueur d'onde apte à être intégré dans un système optique d'imagerie sans lentille pour, en utilisation, répartir sur une scène à éclairer des rayons lumineux provenant d'une source lumineuse annexe.

**EXPOSÉ DE L'INVENTION**

Cet objectif est atteint avec un dispositif de démultiplexage en longueur d'onde configuré pour, en utilisation, répartir spatialement les contributions spectrales d'un faisceau lumineux incident, et qui comporte :

- un guide d'onde linéaire, apte à réaliser un guidage optique le long d'une ligne de guidage et sur une plage de longueurs d'onde d'utilisation ; et
- un guide d'onde planaire, apte à réaliser un guidage optique dans un plan de guidage et sur ladite plage de longueurs d'onde d'utilisation ;

avec le guide d'onde linéaire et le guide d'onde planaire formés coplanaires, et configurés pour, en utilisation, être couplés optiquement l'un à l'autre par couplage évanescent le long d'une ligne de couplage.

En fonctionnement, la lumière est injectée dans le dispositif au niveau d'une extrémité du guide d'onde linéaire. La lumière se propage dans le guide d'onde linéaire, et rentre progressivement dans le guide d'onde planaire par couplage évanescent, au niveau de la ligne de couplage. Toutes les longueurs d'onde ne sont pas transférées vers le guide d'onde planaire de manière homogène, le long de la ligne de couplage. Certaines valeurs de longueur d'onde sont transférées préférentiellement au début de la ligne de couplage, et d'autres valeurs de longueur d'onde sont transférées préférentiellement à la fin de la ligne de couplage, où le début et la fin de la ligne de couplage sont définis relativement au sens de propagation de la lumière dans le guide d'onde linéaire. En outre, à l'arrivée dans le guide d'onde planaire, la direction de propagation de la lumière est fonction de la longueur d'onde. On réalise ainsi une séparation spatiale des longueurs d'onde constitutives d'un faisceau lumineux envoyé en entrée du guide d'onde linéaire.

Le dispositif de démultiplexage selon l'invention, basé sur un couplage évanescent dans un guide d'onde planaire, peut aisément être adapté au démultiplexage en longueur d'onde d'un faisceau lumineux infrarouge.

Par défaut, les différentes contributions spectrales sont réparties dans le plan du guide d'onde linéaire et du guide d'onde planaire. Le dispositif de démultiplexage selon l'invention peut comprendre en outre :

- un ensemble d'extraction, situé dans le guide d'onde planaire, et constitué d'une pluralité de réseaux de diffraction configurés chacun pour extraire de la lumière hors du guide d'onde planaire ;

avec les réseaux de diffraction de l'ensemble d'extraction configurés pour extraire la lumière chacun à une longueur d'onde différente, nommée longueur d'onde d'extraction.

Cette variante permet de répartir les différentes contributions spectrales hors du plan du guide d'onde linéaire et du guide d'onde planaire. Le dispositif ainsi formé peut être couplé à un ensemble de fibres optiques, aptes chacune à recevoir un signal à une longueur d'onde respective. En variante, le dispositif ainsi formé peut être utilisé pour répartir directement sur une scène à éclairer des rayons lumineux provenant d'une source lumineuse annexe.

**EP 3 936 912 A1**

De préférence, les réseaux de diffraction de l'ensemble d'extraction sont configurés pour tous extraire la lumière avec un même angle d'extraction en valeur absolue, chacun à leur longueur d'onde d'extraction respective. Dans chaque réseau de diffraction, l'angle d'extraction désigne un angle formé entre la normale au guide d'onde planaire, et un axe selon lequel est orientée la lumière extraite à la longueur d'onde d'extraction (nommé axe d'extraction).

Les réseaux de diffraction sont des réseaux de couplage, connus dans le domaine de l'optique intégrée pour réaliser un couplage optique entre une fibre optique et un guide d'onde intégré sur une puce photonique. Un réseau de diffraction est constitué de motifs répartis de manière régulière ou quasi-régulière. La valeur du pas moyen de répartition des motifs définit la valeur absolue de l'angle d'extraction à la longueur d'onde d'extraction associée audit réseau de diffraction.

L'ensemble d'extraction est logé au sein du guide d'onde planaire, sans augmenter l'épaisseur de ce dernier. En outre, le guide d'onde planaire et le guide d'onde linéaire sont agencés coplanaires, intégrés de préférence au sein d'un même substrat. Le dispositif selon l'invention peut donc présenter une épaisseur réduite, inférieure ou égale à 1,5 mm, et compatible avec une intégration dans un système d'imagerie sans lentille compact.

La fabrication d'un tel dispositif ne nécessite pas la mise en œuvre de procédés complexes, et présente des contraintes réduites notamment en termes d'alignement.

En fonctionnement, la lumière est injectée dans le dispositif au niveau d'une extrémité du guide d'onde linéaire, puis transférée dans le guide d'onde planaire par couplage évanescent, le long de toute la ligne de couplage. Ce couplage réalise un premier étalement spatial des contributions spectrales de la lumière. Cet étalement est encore augmenté par la propagation de la lumière dans le guide d'onde planaire. Les réseaux de diffraction de l'ensemble d'extraction sont aptes à extraire de la lumière chacun à une longueur d'onde différente, nommée longueur d'onde d'extraction. En outre, ils sont chacun positionnés dans le guide d'onde planaire de manière à recevoir de la lumière à leur longueur d'onde d'extraction. L'ensemble d'extraction réalise ainsi l'extraction de la lumière hors du plan du guide d'onde planaire. Les différentes contributions spectrales du faisceau lumineux en entrée du guide d'onde linéaire sont extraites à différents emplacements sur le guide d'onde planaire, chacune par l'un des réseaux de diffraction de l'ensemble d'extraction. On peut ainsi récupérer la lumière d'un faisceau lumineux étroit et de large spectre, et extraire chacune de ces contributions spectrales hors du plan du guide d'onde linéaire et du guide d'onde planaire, au niveau d'une pluralité d'emplacements répartis sur une surface de grande étendue. Le dispositif selon l'invention permet par exemple d'éclairer une surface appartenant à un échantillon à analyser, et présentant une largeur supérieure ou égale à 1 mm (la largeur désignant la plus grande distance séparant deux points sur la surface considérée). La répartition de lumière sur ladite surface est relativement homogène, en termes d'intensité lumineuse, puisqu'une pluralité de réseaux participe à l'extraction de lumière. On peut ainsi réaliser une répartition chromatique de lumière, sur une large surface, de manière homogène en termes d'intensité lumineuse (mais pas en termes de longueur d'onde), et à l'aide d'un dispositif fin et facile à fabriquer.

De préférence, une distance entre le guide d'onde linéaire et le guide d'onde planaire varie de manière décroissante, le long de la ligne de couplage et dans le sens de propagation de la lumière dans le guide d'onde linéaire en utilisation.

Avantageusement, le guide d'onde planaire comprend une couche de cœur dont un bord en regard de la ligne de couplage est courbé sur lui-même pour former un renfoncement, et le guide d'onde linéaire est courbé sur lui-même, et situé à l'intérieur du renfoncement formé dans le guide d'onde planaire. En particulier, le bord de la couche de cœur en regard de la ligne de couplage peut former une portion d'arc de cercle sur un secteur angulaire compris entre 240° et 330°. Le bord opposé de la couche de cœur peut également être courbé sur lui-même. Le bord de la couche de cœur en regard de la ligne de couplage et son bord opposé peuvent chacun former une portion d'arc de cercle, lesdits arcs de cercle étant de préférence concentriques. La couche de cœur forme alors une portion d'anneau, par exemple sur un secteur angulaire compris entre 240° et 330°.

Les réseaux de diffraction de l'ensemble d'extraction peuvent être positionnés de sorte que, dans une projection orthogonale des réseaux de diffraction sur la ligne de couplage, ces derniers soient rangés par ordre décroissant de leur longueur d'onde d'extraction, le long de la ligne de couplage et dans le sens de propagation de la lumière dans le guide d'onde linéaire en utilisation.

Dans une projection orthogonale des réseaux de diffraction sur la ligne de couplage, ces derniers sont avantageusement rangés par ordre croissant de leur taux d'extraction, le long de la ligne de couplage et dans le sens de propagation de la lumière dans le guide d'onde linéaire en utilisation.

De préférence, dans chacun des réseaux de diffraction de l'ensemble d'extraction, les motifs du réseau de diffraction sont disposés le long de lignes qui sont orthogonales à une direction de propagation de la lumière dans le guide d'onde planaire au niveau dudit réseau de diffraction.

De manière avantageuse, le guide d'onde planaire comporte une couche de cœur intercalée entre deux couches de gaine, et les réseaux de diffraction s'étendent dans l'une des couches de gaine, ou dans une région superficielle de la couche de cœur au niveau d'une interface entre la couche de cœur et l'une parmi les deux couches de gaine.

Selon un mode de réalisation avantageux :

- le guide d'onde planaire comprend une couche de cœur dont un bord en regard de la ligne de couplage est courbé sur lui-même pour former un renfoncement,
- le guide d'onde linéaire est courbé sur lui-même, et situé à l'intérieur du renfoncement formé dans le guide d'onde planaire ; et
- le dispositif comporte en outre un substrat de support, transparent sur la plage de longueurs d'onde d'utilisation, superposé au guide d'onde planaire le long d'un axe orthogonal au plan du guide d'onde planaire,

avec le substrat de support qui est muni d'une ouverture traversante située au regard d'une partie au moins du renfoncement formé dans le guide d'onde planaire.

L'ouverture traversante peut être délimitée par au moins une face transverse, qui s'étend d'une face à la face opposée du substrat de support, et ladite face transverse comporte une surface incurvée ou une série de facettes inclinées en biais relativement au plan du guide d'onde planaire.

Chacun des réseaux de diffraction peut être configuré pour extraire de la lumière à sa longueur d'onde d'extraction, selon un axe d'extraction respectif orienté en biais relativement au plan du guide d'onde planaire, avec l'axe d'extraction orienté de sorte que la lumière extraite arrive à incidence normale sur ladite face transverse.

Le dispositif selon l'invention peut comporter en outre un piédestal, transparent sur la plage de longueurs d'onde d'utilisation, et situé au regard de l'ouverture traversante formée dans le substrat de support.

L'invention couvre également un système d'imagerie infrarouge qui comporte :

- un dispositif de démultiplexage en longueur d'onde selon le mode de réalisation avantageux mentionné ci-dessus, configuré pour, en utilisation, répartir sur une scène à éclairer des rayons lumineux provenant d'une source lumineuse annexe ; et
- un module d'imagerie, comportant un détecteur infrarouge matriciel configuré pour recevoir des rayons lumineux renvoyés par la scène à éclairer ;

avec le détecteur infrarouge matriciel situé au regard d'une partie au moins du renfoncement formé dans le guide d'onde planaire, du côté du guide d'onde planaire opposé au substrat de support.

Le système peut comporter en outre une source lumineuse infrarouge formant la source lumineuse annexe, et le dispositif de démultiplexage en longueur d'onde est configuré pour, en utilisation, recevoir en entrée des rayons lumineux provenant de ladite source lumineuse infrarouge et répartir ces rayons sur la scène à éclairer.

Le système selon l'invention peut comporter un élément d'espacement, monté solidaire du module d'imagerie, et pourvu d'une surface d'appui destinée à venir au contact d'un échantillon à analyser et située d'un côté de l'élément d'espacement opposé au module d'imagerie, et le dispositif de démultiplexage en longueur d'onde forme tout ou partie de l'élément d'espacement.

**BREVE DESCRIPTION DES DESSINS**

La présente invention sera mieux comprise à la lecture de la description d'exemples de réalisation donnés à titre purement indicatif et nullement limitatif, en faisant référence aux dessins annexés sur lesquels :

- les figures 1A et 1B illustrent de façon schématique un dispositif de démultiplexage en longueur d'onde selon un deuxième mode de réalisation de l'invention, respectivement selon une vue de dessus en transparence et selon une vue en coupe ;
- la figure 2 illustre de façon schématique le fonctionnement du dispositif de la figure 1A ;
- les figures 3A et 3B illustrent de façon schématique deux exemples de réseau de diffraction dans le dispositif de la figure 1A ;
- les figures 4A, 4B, 4C, 4D, 4E et 4F illustrent de façon schématique différents modèles de répartition des réseaux de diffraction dans un dispositif selon l'invention ;
- la figure 5 illustre de façon schématique, selon une vue en coupe, un dispositif selon un troisième mode de réalisation de l'invention ;
- les figures 6A et 6B illustrent de façon schématique un système d'imagerie infrarouge selon un premier mode de réalisation de l'invention, respectivement selon une vue en coupe et selon une vue de dessus en transparence ;
- la figure 7 illustre de façon schématique, selon une vue en coupe, un système d'imagerie infrarouge selon un deuxième mode de réalisation de l'invention ;
- la figure 8 illustre de façon schématique un système d'imagerie infrarouge selon l'invention, en utilisation ;
- la figure 9 illustre de façon schématique, selon une vue de dessus en transparence, un dispositif selon un quatrième mode de réalisation de l'invention ; et
- la figure 10 illustre de façon schématique, selon une vue de dessus en transparence, un dispositif de démultiplexage en longueur d'onde selon un premier mode de réalisation de l'invention.

**EXPOSÉ DÉTAILLÉ DE MODES DE RÉALISATION PARTICULIERS**

Pour faciliter la lecture, on a représenté sur les figures les axes d'un repère orthonormé (Oxyz).

Dans tout le texte, le terme « infrarouge » se rapporte à une partie du spectre lumineux appartenant à une bande spectrale allant de 0,78 $\mu$m à 50 $\mu$m, plus préférentiellement de 2 $\mu$m à 14 $\mu$m.

Un guide d'onde est constitué d'un cœur, dans lequel circule la lumière, et d'une gaine, assurant une différence d'indice optique souhaitée entre le cœur et un milieu entourant le cœur. Le cœur est constitué d'un matériau optiquement transparent aux longueurs d'onde à propager, par exemple avec un taux de transmission supérieur ou égal à -3 dB/cm auxdites longueurs d'onde. Il présente avantageusement un même indice optique et une même composition chimique sur tout son volume. Le guide d'onde est apte à guider la propagation de la lumière, par réflexions successives aux interfaces entre le cœur et la gaine (ici, il s'agit plus particulièrement d'un guidage réfractif). Dans un guide d'onde planaire, une couche de cœur est intercalée entre deux couches de gaine, et la lumière est guidée dans la couche de cœur par réflexions successives aux interfaces (planes et parallèles entre elles) entre la couche de cœur et chacune respective des couches de gaine. Ainsi, la lumière est confinée selon l'un des axes de l'espace à trois dimensions, et libre de se propager selon les deux autres axes de l'espace à trois dimensions. La couche de cœur est constituée en pratique d'une pièce optique présentant une dimension réduite selon l'un des axes de l'espace à trois dimensions (ici l'axe (Oz) de l'épaisseur), et de grandes dimensions selon chacun des deux autres axes de l'espace à trois dimensions (ici les axes (Ox) et (Oy) de la longueur et la largeur). Dans la couche de cœur, le rapport entre l'épaisseur et la longueur, respectivement l'épaisseur et la largeur, est de préférence supérieur ou égal à 5, voire supérieur ou égal à 10. Sur le même principe, dans un guide d'onde linéaire, un cœur s'étend le long d'une ligne en étant entouré d'une gaine, et la lumière est libre de se propager le long de ladite ligne et confinée dans les autres directions.

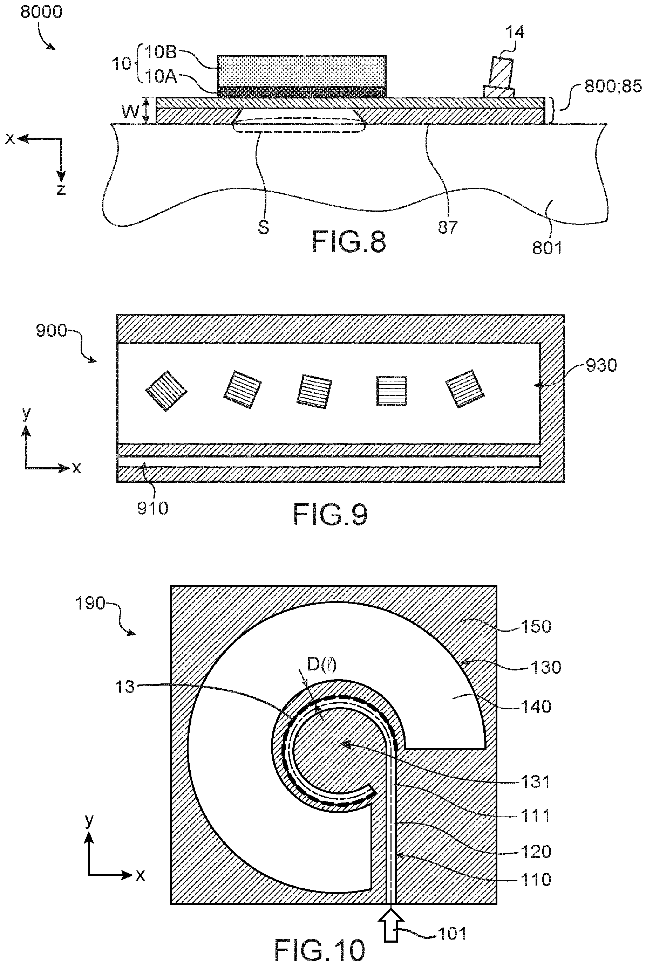

On décrit pour commencer un premier mode de réalisation d'un dispositif 190 de démultiplexage en longueur d'onde selon l'invention. Ce dispositif est illustré en figure 10, selon une vue de dessus en transparence. Le dispositif 190 comporte un guide d'onde linéaire 110 et un guide d'onde planaire 130.

Le guide d'onde linéaire 110 est apte à réaliser un guidage optique le long d'une ligne de guidage 111 et sur une plage de longueurs d'onde d'utilisation. La ligne de guidage 111 s'étend dans un plan parallèle au plan (xOy). La plage de longueurs d'onde d'utilisation est située dans l'infrarouge, et présente une largeur spectrale supérieure ou égale à 3 $\mu$m, par exemple une largeur spectrale allant de 5,9 $\mu$m à 9,7 $\mu$m.

Le guide d'onde linéaire 110 comprend un cœur 120, noyé dans une couche bas indice 150. L'indice optique du cœur 120 est strictement supérieur à l'indice optique de la couche bas indice 150. Ici, la gaine du guide d'onde linéaire 110 est formée par une région de la couche bas indice 150 entourant le cœur 120. Le cœur 120 est constitué ici de germanium, ou d'un alliage de germanium et silicium (SiGe). La couche bas indice 150 est constituée ici d'un alliage de germanium et silicium, avec une plus forte teneur en silicium que dans le cœur 120. Par exemple, le cœur 120 est en germanium et la couche bas indice 150 est en alliage germanium-silicium avec 40% d'atomes de germanium. En tout état de cause, le cœur 120 et la couche bas indice 150 sont chacun optiquement transparents sur la plage de longueurs d'onde d'utilisation, par exemple avec un taux de transmission supérieur ou égal à -3 dB/cm auxdites longueurs d'onde.

Le cœur 120 du guide d'onde linéaire 110 s'étend le long de la ligne de guidage 111 située dans un plan (xOy). La section du cœur 120 dans un plan orthogonal à la ligne de guidage 111 est de préférence de forme carrée, par exemple un carré de 1,8 $\mu$m de côté. En fonctionnement, la lumière dans le guide d'onde linéaire est guidée le long de cette ligne de guidage 111, par réflexions successives aux interfaces entre le cœur 120 et la couche bas indice 150. La ligne de guidage 111 peut comprendre une portion courbe et/ou une portion droite. Elle est constituée ici d'une portion droite suivie d'une portion en arc de cercle. La portion en arc de cercle est de préférence un arc de cercle d'angle compris entre 220° et 260°, ici un angle de 240°. Le rayon de courbure de la portion en arc de cercle est compris par exemple entre 500 $\mu$m et 1 mm, par exemple 707 $\mu$m (au centre du guide).

De préférence, l'épaisseur du guide d'onde linéaire est comprise entre 1,5 $\mu$m et 2,0 $\mu$m (dimensions selon l'axe (Oz)), par exemple une épaisseur de 1,8 $\mu$m. De préférence, le guide d'onde linéaire 110 est monomode selon l'axe (Oz), et sur toute la plage de longueurs d'onde d'utilisation. A une longueur d'onde de 5,9 $\mu$m (et donc *a fortiori* aux longueurs d'onde supérieures), le guide d'onde linéaire 110 est monomode pour une épaisseur supérieure ou égale à 1,8 $\mu$m.

Le guide d'onde planaire 130 est apte à réaliser un guidage optique dans un plan de guidage et sur ladite plage de longueurs d'onde d'utilisation. Le plan de guidage, nommé également plan du guide d'onde planaire, s'étend ici parallèle au plan (xOy). Le guide d'onde planaire 130 comprend une couche de cœur 140, noyée dans la même couche bas indice 150. L'indice optique de la couche de cœur 140 est strictement supérieur à l'indice optique de la couche bas indice 150. Ici, la gaine du guide d'onde planaire 130 est formée par les régions de la couche bas indice 150 entourant la couche de cœur 120. La gaine du guide d'onde planaire 130 comporte en particulier deux couches de gaine, situées de part et d'autre de la couche de cœur 140 le long de l'axe (Oz). La couche de cœur 140 est constituée de préférence du même matériau que le cœur 120 du guide d'onde linéaire 110. En fonctionnement, la lumière dans le guide d'onde planaire 130 est guidée dans un plan de guidage, par réflexions successives aux interfaces entre la couche de cœur 140 et les couches de gaine formées par le matériau de la couche bas indice 150. De préférence, le guide d'onde planaire 130 est monomode selon l'axe (Oz), et sur toute la plage de longueurs d'onde d'utilisation.

Le guide d'onde linéaire 110 et le guide d'onde planaire 130 sont coplanaires. En particulier, le cœur 120 du guide d'onde linéaire 110 et la couche de cœur 140 du guide d'onde planaire 130 ont leurs faces inférieures respectives coplanaires et leurs faces supérieures respectives coplanaires, et toutes parallèles au plan (xOy). La ligne de guidage 111 s'étend donc dans le plan de guidage du guide d'onde planaire 130. La couche de cœur 140 du guide d'onde planaire 130 et le cœur 120 du guide d'onde linéaire 110 sont par exemple formés dans une couche en germanium d'épaisseur 1,8 $\mu$m, noyée dans une couche en SiGe (avec 40% de Ge). On a ici une épaisseur de 4 $\mu$m de SiGe, de part et d'autre de la couche en germanium le long de l'axe (Oz).

Ici, le guide d'onde planaire 130 et sa couche de cœur 140 comportent un renfoncement 131, ou retrait. En particulier, la couche de cœur 140 du guide d'onde planaire 130 a ici une forme de prisme droit, avec les bases du prisme parallèles au plan (xOy). Une largeur des bases du prisme est par exemple comprise entre 2 mm et 5 mm. Ici, les bases du prisme ont chacune leur contour extérieur délimité par un disque, nommé disque externe. Dans chacune des bases du prisme, le renfoncement 131 correspond à une ouverture dans le disque externe, ou retrait, qui s'étend ici depuis un bord jusqu'au centre du disque externe. Dans chacune des bases du prisme, l'ouverture dans le disque externe est constituée ici par la combinaison d'un secteur angulaire et d'un disque interne, avec le disque interne agencé sensiblement concentrique avec le disque externe, et avec le secteur angulaire d'angle compris entre 120° et 30° (90°, sur l'exemple de la figure 10). Un rapport entre un diamètre du disque externe et un diamètre du disque interne est avantageusement supérieur ou égal à deux.

Le guide d'onde linéaire 110 s'étend ici à l'intérieur du renfoncement 131, sans contact physique direct entre le cœur 120 du guide d'onde linéaire 110 et la couche de cœur 140 du guide d'onde planaire 130. Le matériau de la couche bas indice 150 s'étend à l'intérieur du renfoncement 131, notamment entre le cœur 120 du guide d'onde linéaire 110 et la couche de cœur 140 du guide d'onde planaire 130.

Le guide d'onde linéaire 110 et le guide d'onde planaire 130 sont aptes à être couplés optiquement l'un à l'autre, sur la plage de longueurs d'onde d'utilisation, par couplage évanescent, et tout le long d'une ligne de couplage 13 (en pointillés). Dit autrement, selon toute l'étendue d'une ligne nommée ligne de couplage 13, le guide d'onde linéaire 110 et le guide d'onde planaire 130 sont agencés suffisamment proches l'un de l'autre pour qu'une onde évanescente générée par un faisceau lumineux dans l'un des guides pénètre dans l'autre guide. La ligne de couplage 13 s'étend le long d'un bord du cœur 120 du guide d'onde linéaire 110, au niveau de la portion en arc de cercle de ce dernier, et en regard d'un bord de la couche de cœur 140 du guide d'onde planaire 130. La ligne de couplage 13 s'étend ici dans le renfoncement 131.

En fonctionnement, un faisceau lumineux large spectre est injecté en entrée du guide d'onde linéaire 110, au niveau de la portion droite de ce dernier (flèche 101). Le spectre en longueur d'onde du faisceau 101 s'étend au moins sur toute la plage de longueurs d'onde d'utilisation, et avec une largeur spectrale supérieure ou égale à 3 $\mu$m. La lumière est guidée dans le guide d'onde linéaire 110, jusqu'au niveau de la ligne de couplage 13. Au niveau de la ligne de couplage 13, la lumière est progressivement transférée depuis le guide d'onde linéaire 110 vers le guide d'onde planaire 130, par couplage évanescent.

Les différentes longueurs d'onde ne sont pas toutes transférées de manière homogène vers le guide d'onde planaire 130, le long de la ligne de couplage. De manière avantageuse, une distance D(I) entre le cœur 120 du guide d'onde linéaire 110 et la couche de cœur 140 du guide d'onde planaire 130 varie en fonction de la position I considérée le long de la ligne de couplage. La variation de la distance D(I) en fonction de I est adaptée pour qu'une valeur de longueur d'onde $\lambda$H soit transférée de manière homogène vers le guide d'onde planaire 130, sur tout le long de la ligne de couplage 13. La longueur d'onde $\lambda$H appartient à la plage de longueurs d'onde d'utilisation. Les autres longueurs d'onde de la plage de longueurs d'onde d'utilisation sont transférées de manière non homogène vers le guide d'onde planaire 130. De préférence, elles sont transférées avec un taux de transmission qui augmente, respectivement diminue, le long de la ligne de couplage 13 et dans le sens de propagation de la lumière dans le guide d'onde linéaire 110, selon que la longueur d'onde considérée est inférieure, respectivement supérieure à $\lambda$H. La distance D(I) est mesurée, en tout point, le long d'un axe orthogonal à la tangente à la ligne de couplage 13 au niveau du point considéré. Avantageusement, la distance D(I) décroît le long de la ligne de couplage 13 et dans le sens de propagation de la lumière dans le guide d'onde linéaire 110 en utilisation. $\lambda$H est de préférence une longueur d'onde médiane de la plage de longueurs d'onde d'utilisation. Par exemple, la plage de longueurs d'onde d'utilisation va de 5,9 $\mu$m à 9,7 $\mu$m, et $\lambda$H vaut 7,8 $\mu$m. Les longueurs d'onde comprises entre 7,8 $\mu$m et 9,7 $\mu$m sont alors transférées vers le guide d'onde planaire 130 principalement au niveau d'une zone amont de la ligne de couplage 13, du côté de l'entrée du guide d'onde linéaire 110, tandis que les longueurs d'onde comprises entre 5,9 $\mu$m et 7,8 $\mu$m sont transférées principalement au niveau d'une zone avale de la ligne de couplage 13, du côté opposé à l'entrée du guide d'onde linéaire 110. Pour avoir cette variation de la distance D(I), le disque interne mentionné ci-avant, définissant la forme du renfoncement 131 dans le guide d'onde planaire 130, n'est pas agencé exactement concentrique avec la portion en arc de cercle du guide d'onde planaire 110. En complément ou en variante, la variation de la distance D(I) est obtenue à l'aide d'un bord de la couche de cœur 140, au niveau de la ligne de couplage 13 (ici dans le renfoncement 131), qui ne suit pas exactement une forme en arc de cercle. En complément ou en variante, la variation de la distance D(I) est obtenue à l'aide d'un guide d'onde linéaire 110 dont une portion courbée ne suit pas exactement une forme en arc de cercle.

Ainsi, à chaque longueur d'onde correspond une position déterminée le long de la ligne de couplage 13, où le taux de transfert d'énergie est maximal (à l'exception de λH qui est transférée de manière homogène sur toute la ligne de couplage). En outre, au départ de chaque position le long de la ligne de couplage 13, la lumière se propage dans le guide d'onde planaire 130 dans une direction qui est fonction de la longueur d'onde. En particulier, un angle de transfert θ(λ) dépend de la longueur d'onde λ, avec θ(λ) un angle formé, en chaque point de la ligne de couplage 13, entre la tangente au cœur 120 du guide d'onde linéaire 110 et un rayon lumineux transféré du guide d'onde linéaire 110 au guide d'onde planaire 130. En supposant que l'angle de transfert θ(λ) ne varie pas avec la distance D(I) (hypothèse réaliste), cet emplacement optimal est défini à l'aide de l'équation (1) donnant la valeur de l'angle θ en fonction de λ :

$$\theta(\lambda) = \arcsin\left(\sqrt{\frac{\tilde{n}_{eff}^2(\lambda) - n_{eff}^2(\lambda)}{\tilde{n}_{eff}^2(\lambda)}}\right) \tag{1}$$

avec $n_{eff}$ l'indice effectif du mode guidé dans le guide d'onde linéaire 110 et $\tilde{n}_{eff}$ l'indice effectif du mode guidé dans le guide d'onde planaire 130.

Le dispositif de la figure 10 réalise ainsi un démultiplexage en longueur d'onde, puisqu'il sépare spatialement les contributions spectrales d'un faisceau lumineux incident injecté en entrée du guide d'onde linéaire 110, de préférence un faisceau lumineux dans l'infrarouge. Les longueurs d'onde sont réparties dans le plan (xOy) du guide d'onde planaire 130.

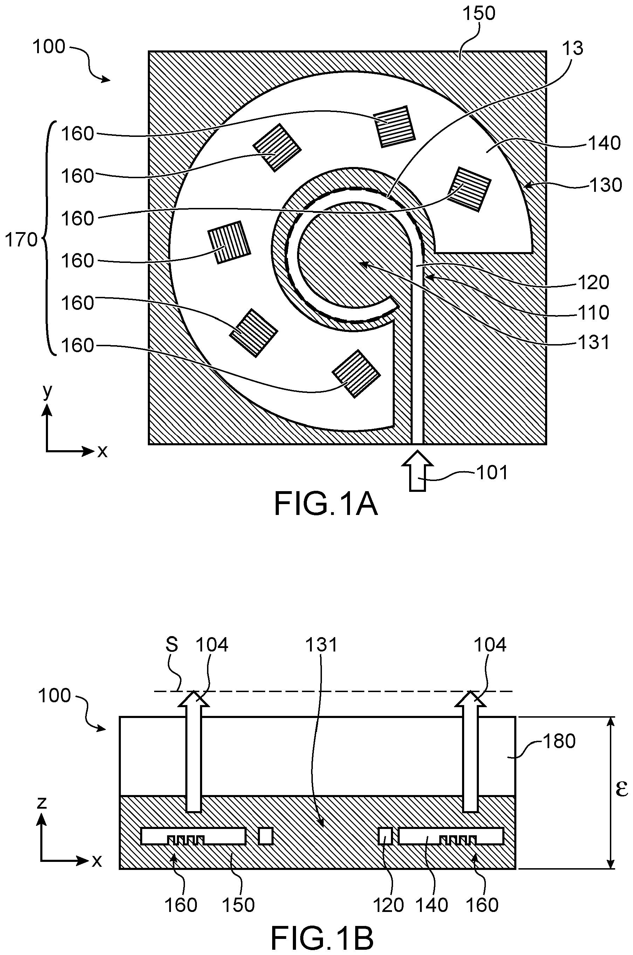

On décrit ensuite un deuxième mode de réalisation d'un dispositif 100 de démultiplexage selon l'invention, pour répartir les longueurs d'onde hors du plan du guide d'onde planaire. Ce dispositif 100 est illustré aux figures 1A et 1B, respectivement selon une vue de dessus en transparence et selon une vue en coupe dans un plan (xOz) passant par le centre du dispositif 100. Ce deuxième mode de réalisation ne diffère du dispositif de la figure 10 qu'en ce qu'il comporte en outre un ensemble d'extraction 170, constitué d'une pluralité de réseaux de diffraction 160. Un réseau de diffraction désigne une succession de motifs, répartis de manière périodique ou quasi-périodique (variation du pas inférieure ou égale à 10% entre deux motifs consécutifs). Dans l'invention, chaque réseau de diffraction 160 est adapté à dévier, hors du plan du guide d'onde planaire 130, la lumière circulant dans ce dernier.

Les réseaux de diffraction 160 s'étendent dans le guide d'onde planaire 130, ici à l'intérieur d'une région superficielle de la couche de cœur 140. Avantageusement, un rapport entre l'épaisseur de la couche de cœur 140 du guide d'onde planaire 130 et la profondeur des réseaux de diffraction 160 est alors supérieur ou égal à deux. Les réseaux de diffraction 160 sont constitués ici de motifs qui comportent chacun une portion constituée du matériau de la couche de cœur 140 et une portion constituée du matériau de la couche bas indice 150. Par exemple, les réseaux de diffractions 160 sont formés d'une matrice de plots en matériau de la couche de cœur 140 noyés dans le matériau de la couche bas indice 150. De préférence, mais de manière non limitative, chaque réseau de diffraction 160 est un réseau à une dimension, constitué de motifs qui s'étendent selon des lignes droites parallèles entre elles ou même selon des lignes courbes. Les motifs sont de préférence invariants selon l'axe (Oz).

Les réseaux de diffraction 160 sont configurés pour extraire de la lumière hors du guide d'onde planaire 130, chacun à une longueur d'onde différente nommée longueur d'onde d'extraction. Pour cela, chaque réseau de diffraction présente une position sur le guide d'onde planaire et un pas moyen de répartition des motifs adaptés. En particulier, on peut affecter à chaque réseau de diffraction 160 une longueur d'onde d'extraction respective. A l'aide de l'équation (1) reliant un angle de transfert θ(λ) et une longueur d'onde λ, on peut ensuite définir, pour chaque réseau de diffraction 160, un emplacement optimal sur le guide d'onde planaire 130, permettant que ledit réseau 160 reçoive la plus grande quantité de lumière possible à sa longueur d'onde d'extraction. De préférence, tous les réseaux de diffraction 160 présentent une valeur différente de leur longueur d'onde d'extraction, et donc une valeur différente de leur pas moyen de répartition des motifs.

Dans une projection orthogonale sur la ligne de couplage 13, les réseaux de diffraction 160 sont répartis les uns à la suite des autres le long de la ligne de couplage 13. A chaque longueur d'onde $\lambda_i$ correspond une position $I_i$ déterminée le long de la ligne de couplage, où le taux de transfert d'énergie est maximal. Avantageusement, le réseau de diffraction 160, dont la projection orthogonale sur la ligne de couplage est située à la position $I_i$, a donc pour longueur d'onde d'extraction $\lambda_i$. Dans une projection orthogonale sur la ligne de couplage 13, les réseaux de diffraction 160 sont avantageusement rangés par ordre décroissant de leur longueur d'onde d'extraction, le long de la ligne de couplage et dans le sens de propagation de la lumière dans le guide d'onde linéaire 110 en utilisation. La valeur de la longueur d'onde d'extraction et la position de la projection orthogonale du réseau de diffraction 160 sur la ligne de couplage 13 peuvent être reliées par une fonction linéaire. Ici, les réseaux de diffraction 160 s'étendent en outre tous à une même distance de la ligne de couplage 13. Les réseaux de diffraction 160 sont avantageusement positionnés proches les uns des autres, et peuvent même être en contact physique direct deux à deux.

Ici, le dispositif 100 comporte en outre un substrat de support 180. Le substrat de support 180 s'étend au regard de la couche bas indice 150, dans un plan (xOy). Ici, le substrat de support 180 est accolé contre la couche bas indice 150, en contact physique direct avec cette dernière. Le substrat de support 180 s'étend ici du côté du guide d'onde planaire 130 opposé à celui recevant les réseaux de diffraction 160. Le substrat de support 180 est transparent sur la plage de longueurs d'onde d'utilisation. Il présente de préférence un indice optique inférieur à celui de la couche bas indice 150. Il est constitué de préférence par du silicium. Il permet notamment d'assurer la bonne tenue mécanique du guide d'onde planaire 130 et du guide d'onde linéaire 110. Avec ce substrat de support 180, l'épaisseur $\varepsilon$ (selon l'axe (Oz)) du dispositif 100 est comprise de préférence entre 100 $\mu$m et 1,5 mm, de préférence entre 100 $\mu$m et 1,0 mm, par exemple égale à 725 $\mu$m. L'épaisseur du substrat de support est préférentiellement supérieure ou égale à 200 $\mu$m.

En fonctionnement, comme dans le premier mode de réalisation, un faisceau lumineux large spectre est injecté en entrée du guide d'onde linéaire 110 et transféré dans le guide d'onde planaire 130. La lumière se propage ensuite dans le guide d'onde planaire 130, par réflexions successives aux interfaces entre la couche de cœur 140 et la couche bas indice 150, puis est extraite hors du guide d'onde planaire 130 au niveau de chacun des réseaux de diffraction 160 (flèches 104, figure 1B). Chaque réseau de diffraction 160 extrait une contribution spectrale distincte du faisceau lumineux large spectre injecté en entrée. Les différentes contributions spectrales sont extraites hors du plan du guide d'onde planaire 130. Chacun des réseaux de diffraction 160 extrait de la lumière dans deux directions opposées. On peut privilégier l'une des directions d'extraction, par exemple l'extraction en direction du substrat de support 180, vers une surface S. Pour cela, on peut bloquer les rayons émis dans la direction opposée à la surface S, par exemple à l'aide d'une couche d'absorption accolée contre la couche bas indice 150, du côté opposé au substrat de support 180.

De manière avantageuse, chaque réseau de diffraction 160 est optiquement couplé à une fibre optique respective, non représentée, pour recevoir de la lumière à la longueur d'onde d'extraction dudit réseau. En variante, la lumière extraite peut servir à éclairer une scène à éclairer, située de préférence au regard du substrat de support 180.

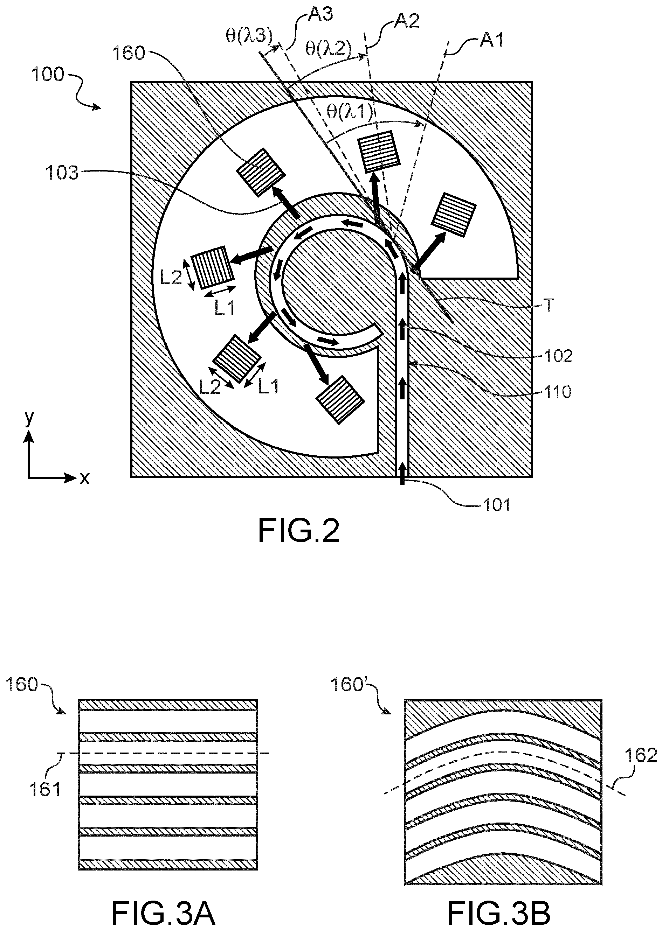

La figure 2 illustre de façon schématique le dispositif 100, en utilisation. La flèche 101 représente le faisceau de lumière injecté en entrée du guide d'onde linéaire 110. Les flèches 102 représentent la lumière se propageant dans le guide d'onde linéaire 110. Les flèches 103 représentent la lumière transférée du guide d'onde linéaire 110 vers le guide d'onde planaire 130, par couplage évanescent. La lumière en provenance du guide d'onde linéaire 110 se propage dans le guide d'onde planaire dans une direction qui est fonction de la longueur d'onde (voir axes A1, A2, A3 associés respectivement à des longueurs d'onde $\lambda 1$, $\lambda 2$, $\lambda 3$ et inclinés d'un angle $\theta(\lambda 1)$, $\theta(\lambda 2)$, respectivement $\theta(\lambda 3)$ relativement à une tangente à la ligne de couplage). Chaque réseau de diffraction 160 de l'ensemble d'extraction est positionné, sur le guide d'onde planaire, de manière à intercepter un maximum de lumière à sa longueur d'onde d'extraction.

Ce deuxième mode de réalisation permet de réaliser un multiplexage et/ou démultiplexage en longueur d'onde, hors plan, à l'aide d'un dispositif qui présente peu de pertes, ainsi qu'une bonne tenue au flux. Le dispositif de multiplexage et/ou démultiplexage en longueur d'onde présente également une grande compacité, et en particulier une épaisseur réduite.

Chaque réseau de diffraction 160 peut présenter une valeur constante du pas de répartition des motifs. En variante, l'un au moins des réseaux peut présenter une valeur variable du pas de répartition des motifs. Dans tous les cas, on peut définir un pas moyen de répartition des motifs, égal à la moyenne arithmétique des valeurs prises par le pas, ou égal au pas lui-même lorsque ce dernier est constant.

Pour éviter que la lumière extraite par un réseau de diffraction 160 ne soit réfléchie à une interface entre le substrat de support 180 et le milieu environnant, un angle entre la normale à ladite interface et un rayon lumineux extrait par ledit réseau doit rester inférieur à un seuil critique. De préférence, cet angle prend la valeur nulle. Les réseaux de diffraction 160 sont alors configurés chacun pour extraire de la lumière leur longueur d'onde d'extraction respective, et dans une direction orthogonale à l'interface entre le substrat de support 180 et le milieu environnant, à l'endroit du substrat de support d'où émerge la lumière extraite. Les réseaux de diffraction 160 sont donc configurés pour extraire chacun de la lumière à leur longueur d'onde d'extraction respective, sous la forme d'un faisceau lumineux orienté selon l'axe (Oz). Dans chaque réseau de diffraction 160, un angle d'extraction à la longueur d'onde d'extraction est défini par la valeur du pas moyen de répartition des motifs. Dit autrement, chaque réseau de diffraction 160 est associé à une longueur d'onde d'extraction prédéterminée, et présente une valeur du pas moyen adaptée pour avoir une valeur souhaitée de l'angle d'extraction à ladite longueur d'onde d'extraction. La valeur adéquate du pas moyen peut être déterminée de façon connue à l'aide de la formule des réseaux et en considérant les ordres de réfraction 1 et -1.

De préférence, chaque réseau de diffraction 160 présente une grande longueur L1, définie selon un axe parallèle à une direction de propagation de la lumière dans le guide d'onde planaire 130, à la longueur d'onde d'extraction dudit réseau et à l'emplacement dudit réseau. En outre, chaque réseau de diffraction 160 présente une grande largeur L2, définie selon un axe orthogonal à l'axe de la longueur L1, dans un plan (xOy). Ici, la longueur L1 est supérieure ou égale à 1 mm, et la largeur L2 supérieure ou égale à 200 $\mu$m. On peut ainsi considérer comme négligeable une divergence des rayons lumineux extraits par le réseau 160, à la longueur d'onde d'extraction.

Chacun des réseaux de diffraction 160 est de préférence un réseau à une dimension, constitué de motifs de forme allongée (par exemple entre 50 et 150 motifs). De préférence, les différents motifs sont parallèles entre eux. Dans le dispositif 100, ces motifs sont orthogonaux à une direction de propagation de la lumière dans le guide d'onde planaire 130, à la longueur d'onde d'extraction et à l'emplacement dudit réseau. Les figures 3A et 3B illustrent deux exemples de répartition des motifs dans un réseau d'extraction du dispositif selon l'invention.

A la figure 3A, les motifs du réseau de diffraction 160 s'étendent le long de lignes droites 161 parallèles entre elle, qui s'étendent chacune d'un bord au bord opposé dudit réseau. Dans le dispositif 100, le réseau de diffraction 160 est orienté de sorte que les lignes droites 161 soient orthogonales à une direction médiane de propagation de la lumière dans le guide d'onde planaire 130, à la longueur d'onde d'extraction et à l'emplacement dudit réseau.

La figure 3B illustre un réseau de diffraction 160' selon une variante de l'invention, dans lequel les motifs du réseau sont répartis le long de lignes courbes convexes 162 qui s'étendent chacune d'un bord au bord opposé dudit réseau. Les lignes courbes convexes 162 sont bombées dans une direction opposée à la ligne de couplage 13. La forme des lignes 162 est adaptée pour que, lorsque la lumière se propage dans le guide d'onde planaire, le réseau de diffraction 160' puisse être orienté de sorte que les lignes courbes 16 2 soient orthogonales en tout point aux rayons lumineux se propageant dans le guide d'onde planaire 130 à la longueur d'onde d'extraction et à l'emplacement dudit réseau.

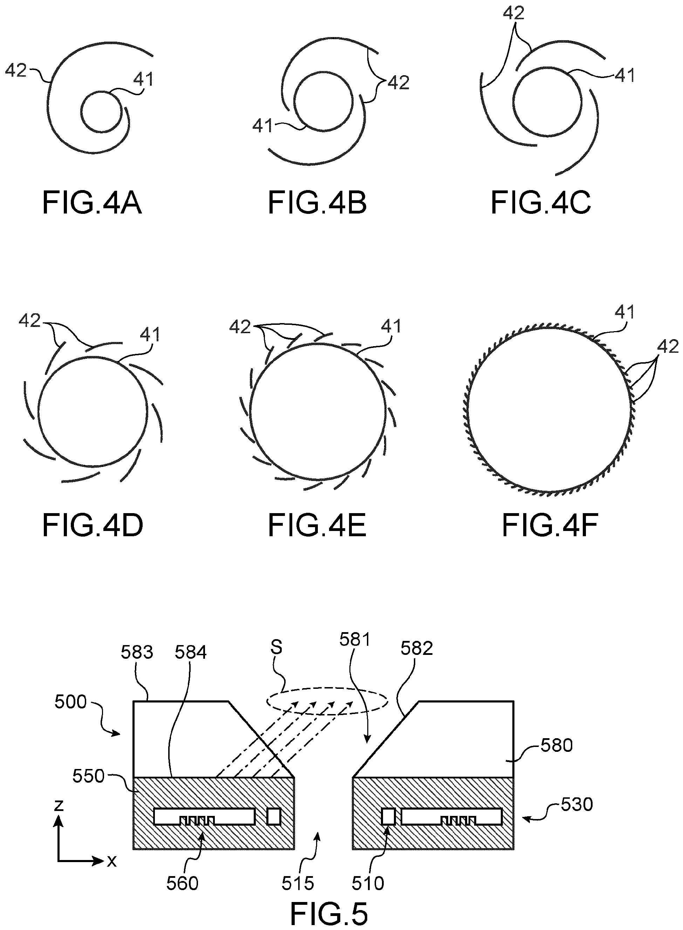

Les figures 4A à 4F illustrent différents modèles de répartition des réseaux de diffraction et de leurs motifs dans le guide d'onde planaire. Sur chacune des figures, on a représenté un disque 41 de même centre et même diamètre que la portion en arc de cercle du guide d'onde linéaire. Les segments courbes 42 autour du disque définissent des lignes le long desquelles s'étendent des motifs des différents réseaux de diffraction. Le modèle de la figure 4F est préféré, parce qu'il offre une grande compacité et un grand volume à l'intérieur de la portion en arc de cercle du guide d'onde linéaire.

En fonctionnement, la lumière est transférée depuis le guide d'onde linéaire 110 vers le guide d'onde planaire 130, au fur et à mesure de sa propagation le long de la ligne de couplage. A chaque longueur d'onde correspond un point où le taux de transfert d'énergie est maximal. La quantité d'énergie transférée, au niveau de ce point, est fonction du taux de transfert d'énergie et de la quantité d'énergie restant dans le guide d'onde linéaire à ladite longueur d'onde et au niveau de ce point. Les longueurs d'onde transférées en premier sont donc transférées avec une plus grande quantité d'énergie que celles transférées en dernier. Selon un mode de réalisation avantageux, le taux d'extraction varie d'un réseau de diffraction 160 à l'autre, pour compenser cet effet et améliorer l'homogénéité de l'extraction de la lumière aux différentes longueurs d'onde. Ce taux d'extraction varie avantageusement de manière monotone croissante, le long de la ligne de couplage 13 et dans le sens de propagation de la lumière dans le guide d'onde linéaire en utilisation. La variation peut inclure des paliers, ou être strictement croissante.

Le taux d'extraction d'un réseau de diffraction est fonction d'une valeur moyenne de son facteur de remplissage, ici un rapport entre le volume total occupé par le matériau de plus bas indice et le volume total du réseau de diffraction. L'extraction est d'autant plus élevée que le facteur de remplissage est proche de 50% (modulation d'indice la plus forte). De préférence, la valeur moyenne du facteur de remplissage n'excède 0,5 (50%) dans aucun des réseaux de diffraction 160 de l'ensemble d'extraction. Dans ce cas, plus le facteur de remplissage est élevé, plus le taux d'extraction est élevé, et inversement. Dans une projection orthogonale sur la ligne de couplage 13, les réseaux de diffraction 160 sont alors avantageusement rangés par ordre croissant de leur facteur de remplissage, le long de la ligne de couplage et dans le sens de propagation de la lumière dans le guide d'onde linéaire 110 en utilisation. Tous les réseaux de diffraction 160 présentent avantageusement une même profondeur (dimension selon l'axe (Oz)), comprise par exemple entre 0,20 et 1 $\mu$m (de préférence la moitié de l'épaisseur de la couche de cœur 140). Le facteur de remplissage défini ci-dessus se réduit donc à un rapport de surfaces. En complément ou en variante, la variation des taux d'extraction peut être obtenue à l'aide de réseaux d'extraction 160 dont la profondeur varie d'un réseau à l'autre et/ou à l'aide de réseaux d'extraction 160 dont la longueur L1 varie d'un réseau à l'autre.

Dans chacun des modes de réalisation et variantes de l'invention, le facteur de remplissage peut être variable au sein d'un même réseau de diffraction 160, pour symétriser le rayonnement en champ lointain.

La figure 5 illustre de façon schématique, selon une vue en coupe, un dispositif 500 selon un troisième mode de réalisation de l'invention, pouvant servir comme multiplexeur et/ou démultiplexeur en longueur d'onde, ainsi que pour réaliser un éclairage en biais d'une scène à éclairer S.

Dans le dispositif 500 de la figure 5, le substrat de support 580 comporte une ouverture traversante 581, qui s'étend au regard d'un volume entouré par la portion en arc de cercle du guide d'onde linéaire 510.

La scène à éclairer S s'étend ici au regard de l'ouverture traversante 581, du côté du substrat de support 580. La scène à éclairer S s'étend avantageusement dans le même plan (xOy) que la face supérieure 583 du substrat de support 580, du côté opposé aux guides d'onde linéaire 510 et planaire 530. Les dimensions de la scène à éclairer S sont sensiblement égales aux dimensions de l'ouverture traversante 581, et donc sensiblement égales aux dimensions du volume entouré par la portion en arc de cercle du guide d'onde linéaire 510. La scène à éclairer S n'est pas alignée avec les réseaux d'extraction. On s'affranchit ainsi des inconvénients liés à l'extraction de lumière vers deux directions opposées.

L'ouverture traversante 581 est délimitée par au moins une face transverse 582, qui s'étend d'une face 583 à une face 584 opposée du substrat de support 580 (avec les faces 583 et 584 parallèles au plan (xOy)). L'au moins une face transverse 582 peut être constituée par une multitude de facettes planes s'étendant chacune en biais relativement au plan (xOy), par exemple inclinées chacune d'un angle égal à 54,74° ou 45° relativement au plan (xOy). En variante, l'au moins une face transverse 582 peut être constituée d'une surface de révolution qui présente une symétrie axiale autour d'un axe parallèle à l'axe (Oz). Une génératrice de cette surface est ici une ligne droite.

Chaque réseau de diffraction 560 est configuré pour extraire la lumière selon un faisceau lumineux respectif, émergeant du dispositif 500 au niveau de la face transverse 582 formée par l'ouverture traversante 581. Chaque réseau de diffraction 560 est donc configuré pour extraire la lumière à sa longueur d'onde d'extraction, selon un faisceau lumineux orienté en biais relativement au plan (xOy). De préférence, la lumière extraite arrive à incidence normale sur la face transverse 582. Comme détaillé ci-avant, cette propriété est obtenue par une valeur adaptée du pas moyen de répartition des motifs dans le réseau. Les réseaux de diffraction 560 de l'ensemble d'extraction présentent donc tous une même valeur de l'angle d'extraction, en valeur absolue et à leur longueur d'onde d'extraction respective.

Le critère d'incidence normale sur la face transverse 582 fixe une demi-largeur de la scène à éclairer S. Avec la face transverse 582 inclinée d'un angle égal à 54,74° relativement au plan (xOy), on peut obtenir une demi-largeur comprise entre 300 $\mu$m et 5 mm, par exemple 512 $\mu$m.

De manière avantageuse, mais optionnelle, la couche bas indice 550 recevant les guides d'onde linéaire 510 et planaire 530 est munie d'une ouverture traversante 515, alignée avec l'ouverture traversante 581 dans le substrat de support 580, et entourée par la portion en arc de cercle du guide d'onde linéaire 510. On limite ainsi des pertes optiques sur un signal lumineux retour (voir ci-après). De préférence, l'ouverture traversante 515 a une section constante le long de l'axe (Oz), égale à la plus petite section de l'ouverture traversante 581 le long de ce même axe.

Dans une variante non représentée, l'ouverture traversante dans le substrat de support est délimitée par une face transverse qui présente une symétrie de révolution autour d'un axe parallèle à l'axe (Oz), et dont la génératrice comporte une portion courbe incurvée vers l'intérieur du substrat de support. L'ouverture traversante dans le substrat de support forme ainsi une surface de révolution agissant comme une lentille concave.

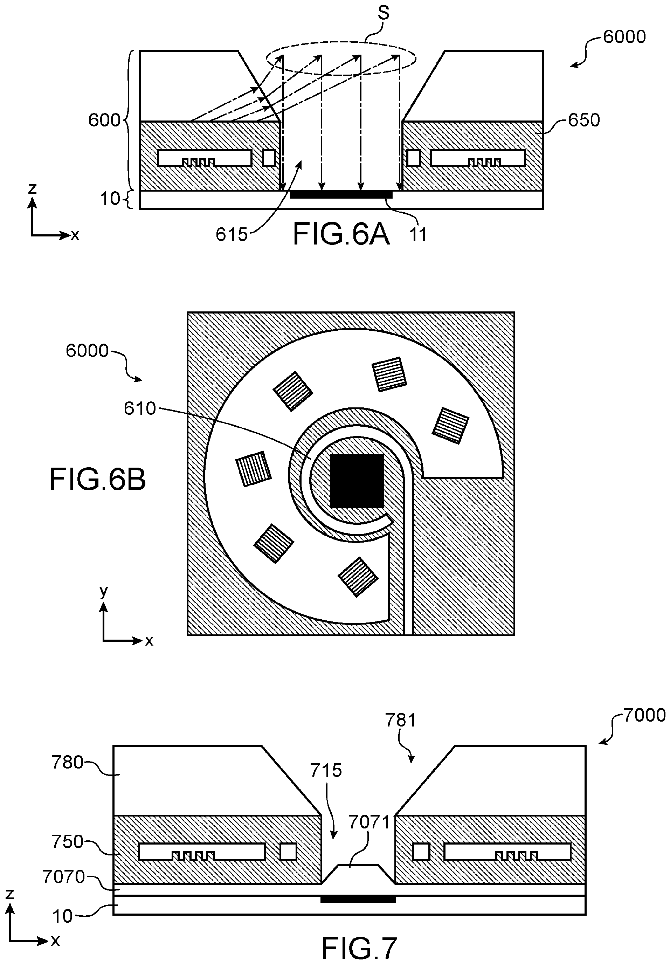

Les figures 6A et 6B illustrent de façon schématique un système d'imagerie infrarouge 6000 selon un premier mode de réalisation de l'invention, respectivement selon une vue en coupe dans un plan (xOz) passant par le centre du système 6000 et selon une vue de dessus en transparence.

Le système 6000 comporte ici un dispositif 600 selon l'invention, et un module de détection 10. Le dispositif 600 correspond au dispositif de la figure 5.

Le module de détection 10 comprend un détecteur infrarouge matriciel, composé de détecteurs infrarouge 11 sensibles dans l'infrarouge et plus particulièrement sur la plage de longueurs d'onde d'utilisation. Il s'agit par exemple d'une matrice de photodiodes à semi-conducteurs ou d'une matrice de bolomètres. Le détecteur infrarouge matriciel s'étend ici selon une surface carrée ou rectangulaire, de côté compris de préférence entre 1 mm et 10 mm. Il s'étend ici dans un plan (xOy). Le module de détection 10 peut comprendre en outre un circuit électronique, non représenté, pour la lecture de signaux électriques fournis par le détecteur infrarouge matriciel. Le détecteur infrarouge matriciel s'étend au regard de l'ouverture traversante 615 formée dans la couche bas indice 650. Dans une projection orthogonale du système 6000 dans un plan (xOy), le détecteur infrarouge matriciel s'étend donc à l'intérieur d'une région délimitée par ladite ouverture traversante 615.

En utilisation, la lumière est répartie sur la scène à éclairer S par le dispositif 600. La scène à éclairer renvoie une partie de la lumière reçue, par rétrodiffusion. La lumière rétrodiffusée traverse le dispositif 600 au niveau des ouvertures traversantes 681 et 615, en traversant une région entourée par la portion en arc de cercle du guide d'onde linéaire 610, puis atteint le module de détection 10. Au niveau de ce module de détection 10, le détecteur infrarouge matriciel acquiert une image de la lumière rétrodiffusée par la scène à éclairer.

Ici, le dispositif 600 et le module de détection 10 sont en contact physique direct l'un avec l'autre. En variante, ils peuvent être séparés par une couche intercalaire bas indice transparente aux longueurs d'onde à détecter, notamment une couche d'air.

La figure 7 illustre de façon schématique, selon une vue en coupe, un système d'imagerie infrarouge 7000 selon un deuxième mode de réalisation de l'invention. Le système 7000 de la figure 7 ne diffère de celui des figures 6A et 6B qu'en ce qu'il comporte en outre un substrat intercalaire 7070, disposé ici entre la couche bas indice 750 et le module de détection 10. Ici, le substrat intercalaire 7070 est situé en contact physique direct avec la couche bas indice 750, du côté opposé au substrat de support 780. Ici, mais de manière non limitative, le substrat intercalaire 7070 est situé en outre en contact physique direct avec le module de détection 10. Le substrat intercalaire 7070 est transparent sur la plage de longueurs d'onde d'utilisation. Il est muni d'un piédestal 7071 faisant saillie à l'intérieur de l'ouverture

## EP 3 936 912 A1

traversante 715 dans la couche bas indice, en direction de l'ouverture traversante 781 dans le substrat de support (dans la direction opposée au module de détection 10).

Le piédestal 7071 comporte des faces latérales inclinées en biais relativement au plan (xOy), de préférence d'un angle de 54,74° relativement au plan (xOy). La hauteur du piédestal 7071 selon l'axe (Oz) est comprise par exemple entre 150 $\mu$m et 250 $\mu$m. Le piédestal 7071 permet de dévier des rayons lumineux parasites qui sinon se propageraient directement depuis la sortie du substrat de support jusqu'au détecteur infrarouge matriciel. De préférence, le substrat intercalaire 7070 est en silicium, comme le substrat de support 780.

Dans une variante non représentée, le substrat intercalaire s'étend plutôt entre la couche bas indice 750 et le substrat de support 780. Dans ce cas, le piédestal fait saillie à l'intérieur de l'ouverture 781 dans le substrat de support 780.

Selon d'autres variantes encore, l'épaisseur du substrat intercalaire est nulle, excepté au niveau des piédestaux.

La figure 8 illustre, de façon schématique, un système d'imagerie infrarouge 8000 selon l'invention, en utilisation. Le système d'imagerie infrarouge 8000 comporte un dispositif 800 tel que celui de la figure 5, recevant la lumière d'une source lumineuse infrarouge 14. La lumière est répartie sur une scène à éclairer S appartenant ici à un échantillon 801. Sur la figure 8, on a représenté expressément le détecteur infrarouge matriciel 10A et le circuit de lecture 10B formant ensemble le module de détection 10.

Le système d'imagerie infrarouge 8000 comporte ici un élément d'espacement 85, ou entretoise, monté solidaire du module de détection 10 du côté du détecteur infrarouge matriciel 10A. L'élément d'espacement 85 comporte une surface d'appui 87, du côté opposé au module de détection 10. La surface d'appui 87 s'étend ici dans un plan parallèle au plan (xOy), parallèle au plan du détecteur infrarouge matriciel 10A. L'élément d'espacement 85 présente une épaisseur W, mesurée selon l'axe (Oz). En fonctionnement, la surface d'appui 87 est appuyée contre l'échantillon 801. Une région de l'échantillon 801 située au regard du détecteur infrarouge matriciel 10A forme la scène à éclairer S. L'élément d'espacement 85 garantit une distance fixe prédéterminée entre la scène à éclairer et le détecteur infrarouge matriciel 10A, nommée distance de travail. La distance de travail est comprise de préférence entre 100 $\mu$m et 1,5 mm. La source lumineuse infrarouge 14 se trouve ici sur l'élément d'espacement 85, du côté opposé à la surface d'appui 87. Le dispositif de démultiplexage 800 est confondu ici avec l'élément d'espacement 85.

Dans des variantes non représentées, le dispositif 800 ne forme qu'une partie seulement de l'élément d'espacement 85. Par exemple, l'élément d'espacement 85 peut être formé par la superposition du dispositif 800 et d'une cale supplémentaire. En tout état de cause, la faible épaisseur du dispositif selon l'invention lui permet de former tout ou partie de l'élément d'espacement 85.

Le module de détection 10 et le dispositif de démultiplexage 800 forment ensemble un système d'imagerie sans lentille, apte à acquérir une image de la scène à éclairer, sans optique de formation d'image (hormis éventuellement une matrice de microlentilles en amont du détecteur infrarouge matriciel 10A. Les images obtenues sont des images large champ, en réflexion.

L'invention n'est pas limitée aux exemples détaillés ci-avant. Par exemple, l'ensemble d'extraction peut être situé dans la couche de cœur du guide d'onde planaire. En variante, l'ensemble d'extraction peut être situé dans une couche de gaine du guide d'onde planaire, préférentiellement du côté opposé au substrat de support. De préférence, les réseaux de diffraction sont constitués alors de portions en matériau de la couche bas indice et de portions creuses aptes à être remplies d'air. L'invention n'est pas non plus limitée à des réseaux de diffraction à une dimension, et couvre également des dispositifs dans lesquels l'ensemble d'extraction comprend ou est constitué de réseau(x) de diffraction à deux dimensions. Un réseau de diffraction à deux dimensions se présente de préférence sous la forme d'une matrice de plots, avec une pluralité de plots selon chaque dimension du réseau de diffraction. De même, l'invention n'est pas limitée aux exemples de matériaux cités, et peut notamment être adaptée à d'autres plages de longueurs d'onde, dans l'infrarouge ou dans le visible. Une distance entre le guide d'onde linéaire et le guide d'onde planaire peut être constante. Le guide d'onde planaire peut avoir ses grandes faces de forme quelconque, par exemple carrées ou rectangulaire (hors renfoncement). Le fond du renfoncement dans le guide d'onde planaire est avantageusement de forme courbe, mais pas forcément arrondi en arc de cercle. Enfin, les différents exemples de dispositif et de système peuvent être combinés entre eux. Selon d'autres variantes encore, le guide d'onde planaire est dépourvu de renfoncement, et le guide d'onde linéaire s'étend contre un bord externe du guide d'onde planaire. Une telle variante 900 est illustrée en figure 9, où le guide d'onde linéaire 910 s'étend en ligne droite le long d'un bord droit du guide d'onde planaire 930. L'ensemble peut être recouvert d'un substrat de support similaire à celui du mode de réalisation de la figure 1B.

Le dispositif selon l'invention peut être réalisé à partir d'un substrat en silicium cristallin, qui peut être aminci. Le guide d'onde planaire et le guide d'onde linéaire sont réalisés par épitaxie d'une première couche bas indice, épitaxie et gravure d'une couche haut indice, puis épitaxie d'une seconde couche bas indice. L'ensemble est poli du côté opposé au substrat en silicium. Le cas échéant, on grave des réseaux de diffraction dans la couche haut indice, par gravure partielle anisotrope, avant l'épitaxie de la seconde couche bas indice. L'ensemble obtenu peut être retourné et gravé partiellement de manière anisotrope en face arrière, pour réaliser une ouverture traversante dans le substrat en silicium et dans les couches bas indice.

Le dispositif et le système selon l'invention trouvent des applications avantageuses dans les domaines de l'imagerie active multispectrale et de l'imagerie active hyperspectrale, pour obtenir des informations biochimiques facilement et rapidement.

**Revendications**

1. Dispositif de démultiplexage en longueur d'onde (100 ; 500 ; 600 ; 800 ; 900 ; 190) configuré pour, en utilisation, répartir spatialement les contributions spectrales d'un faisceau lumineux incident, **caractérisé en ce qu'**il comporte :

   - un guide d'onde linéaire (110 ; 510; 610; 910), apte à réaliser un guidage optique le long d'une ligne de guidage et sur une plage de longueurs d'onde d'utilisation ; et
   - un guide d'onde planaire (130; 530; 930), apte à réaliser un guidage optique dans un plan de guidage et sur ladite plage de longueurs d'onde d'utilisation ;

   avec le guide d'onde linéaire (110 ; 510 ; 610 ; 910) et le guide d'onde planaire (130 ; 530 ; 930) formés coplanaires, et configurés pour, en utilisation, être couplés optiquement l'un à l'autre par couplage évanescent le long d'une ligne de couplage (13),
   une distance (D(l)) entre le guide d'onde linéaire (110 ; 510 ; 610 ; 910) et le guide d'onde planaire (130 ; 530 ; 930) variant de manière décroissante, le long de la ligne de couplage (13) et dans le sens de propagation de la lumière dans le guide d'onde linéaire en utilisation.

2. Dispositif (100 ; 500 ; 600 ; 800 ; 190) selon la revendication 1, **caractérisé en ce que** le guide d'onde planaire (130; 530) comprend une couche de cœur (140) dont un bord en regard de la ligne de couplage (13) est courbé sur lui-même pour former un renfoncement (131), et **en ce que** le guide d'onde linéaire (110 ; 510 ; 610) est courbé sur lui-même, et situé à l'intérieur du renfoncement (131) formé dans le guide d'onde planaire (130 ; 530).

3. Dispositif (100 ; 500 ; 600 ; 800 ; 900) selon l'une quelconque des revendications 1 et 2, comportant en outre :

   - un ensemble d'extraction (170), situé dans le guide d'onde planaire (130 ; 530 ; 930), et constitué d'une pluralité de réseaux de diffraction (160 ; 560) configurés chacun pour extraire de la lumière hors du guide d'onde planaire ;

   avec les réseaux de diffraction (160; 560) de l'ensemble d'extraction configurés pour extraire la lumière chacun à une longueur d'onde différente nommée longueur d'onde d'extraction.

4. Dispositif (100 ; 500 ; 600 ; 800 ; 900) selon la revendication 3, **caractérisé en ce que** les réseaux de diffraction (160; 560) de l'ensemble d'extraction sont positionnés de sorte que, dans une projection orthogonale des réseaux de diffraction sur la ligne de couplage (13), ces derniers soient rangés par ordre décroissant de leur longueur d'onde d'extraction, le long de la ligne de couplage et dans le sens de propagation de la lumière dans le guide d'onde linéaire (110 ; 510 ; 610 ; 910) en utilisation.

5. Dispositif (100 ; 500 ; 600 ; 800 ; 900) selon la revendication 3 ou 4, **caractérisé en ce que**, dans une projection orthogonale des réseaux de diffraction (160 ; 560) sur la ligne de couplage (13), ces derniers sont rangés par ordre croissant de leur taux d'extraction, le long de la ligne de couplage et dans le sens de propagation de la lumière dans le guide d'onde linéaire (110 ; 510 ; 610 ; 910) en utilisation.

6. Dispositif (100 ; 500 ; 600 ; 800 ; 900) selon l'une quelconque des revendications 3 à 5, **caractérisé en ce que**, dans chacun des réseaux de diffraction (160; 560) de l'ensemble d'extraction, les motifs du réseau de diffraction sont disposés le long de lignes qui sont orthogonales à une direction de propagation de la lumière dans le guide d'onde planaire (130 ; 530 ; 930) au niveau dudit réseau de diffraction.

7. Dispositif (100 ; 500 ; 600 ; 800 ; 900) selon l'une quelconque des revendications 3 à 6, **caractérisé en ce que** le guide d'onde planaire (130 ; 530 ; 930) comporte une couche de cœur (140) intercalée entre deux couches de gaine, et **en ce que** les réseaux de diffraction (160 ; 560) s'étendent dans l'une des couches de gaine, ou dans une région superficielle de la couche de cœur (140) au niveau d'une interface entre la couche de cœur et l'une parmi les deux couches de gaine.

8. Dispositif (100 ; 500 ; 600 ; 800) selon l'une quelconque des revendications 3 à 7, **caractérisé en ce que** :

- le guide d'onde planaire (130 ; 530) comprend une couche de cœur (140) dont un bord en regard de la ligne de couplage (13) est courbé sur lui-même pour former un renfoncement (131),
- le guide d'onde linéaire (110 ; 510 ; 610) est courbé sur lui-même, et situé à l'intérieur du renfoncement (131) formé dans le guide d'onde planaire (130; 530); et
- le dispositif comporte en outre un substrat de support (180 ; 580 ; 780), transparent sur la plage de longueurs d'onde d'utilisation, superposé au guide d'onde planaire (130; 530) le long d'un axe orthogonal au plan du guide d'onde planaire, avec le substrat de support (180; 580; 780) qui est muni d'une ouverture traversante (581 ; 681; 781) située au regard d'une partie au moins du renfoncement (131) formé dans le guide d'onde planaire.

9. Dispositif (100 ; 500 ; 600 ; 800) selon la revendication 8, **caractérisé en ce que** l'ouverture traversante (581 ; 681 ; 781) est délimitée par au moins une face transverse (582), qui s'étend d'une face à la face opposée (583, 584) du substrat de support, et **en ce que** ladite face transverse (582) comporte une surface incurvée ou une série de facettes inclinées en biais relativement au plan du guide d'onde planaire (130 ; 530).

10. Dispositif (100 ; 500 ; 600 ; 800) selon la revendication 9, **caractérisé en ce que** chacun des réseaux de diffraction (560) est configuré pour extraire de la lumière à sa longueur d'onde d'extraction, selon un axe d'extraction respectif orienté en biais relativement au plan du guide d'onde planaire, avec l'axe d'extraction orienté de sorte que la lumière extraite arrive à incidence normale sur ladite face transverse (582).

11. Dispositif (700) selon l'une quelconque des revendications 8 à 10, **caractérisé en ce qu'**il comporte en outre un piédestal (7071), transparent sur la plage de longueurs d'onde d'utilisation, et situé au regard de l'ouverture traversante (781) formée dans le substrat de support.

12. Système d'imagerie infrarouge (6000 ; 7000 ; 8000) qui comporte :

- un dispositif de démultiplexage en longueur d'onde (600 ; 700 ; 800) selon l'une quelconque des revendications 8 à 11, configuré pour, en utilisation, répartir sur une scène à éclairer (S) des rayons lumineux provenant d'une source lumineuse annexe ; et
- un module d'imagerie (10), comportant un détecteur infrarouge matriciel (10A) configuré pour recevoir des rayons lumineux renvoyés par la scène à éclairer ;

avec le détecteur infrarouge matriciel situé au regard d'une partie au moins du renfoncement formé dans le guide d'onde planaire, du côté du guide d'onde planaire opposé au substrat de support (780).

13. Système (6000 ; 7000 ; 8000) selon la revendication 12, qui comporte en outre une source lumineuse infrarouge (14) formant la source lumineuse annexe, et dans lequel le dispositif de démultiplexage en longueur d'onde (600 ; 700 ; 800) est configuré pour, en utilisation, recevoir en entrée des rayons lumineux provenant de ladite source lumineuse infrarouge (14) et répartir ces rayons sur la scène à éclairer (S).

14. Système (6000; 7000 ; 8000) selon la revendication 12 ou 13, **caractérisé en ce qu'**il comporte un élément d'espacement (85), monté solidaire du module d'imagerie (10), et pourvu d'une surface d'appui (87) destinée à venir au contact d'un échantillon à analyser et située d'un côté de l'élément d'espacement (85) opposé au module d'imagerie, et **en ce que** le dispositif de démultiplexage en longueur d'onde (600; 700 ; 800) forme tout ou partie de l'élément d'espacement (85).

FIG.1A

FIG.1B

FIG.2

FIG.3A

FIG.3B

FIG.4A

FIG.4B

FIG.4C

FIG.4D

FIG.4E

FIG.4F

FIG.5

S

600 {

6000

650

z

x

615    FIG.6A    11

10 {

6000

610

FIG.6B

y

x

781

7000

780

715

750

7071

7070

10

z

x

FIG.7

FIG.8

FIG.9

FIG.10

Europäisches
Patentamt

European
Patent Office

Office européen
des brevets

**RAPPORT DE RECHERCHE EUROPEENNE**

Numéro de la demande

EP 21 18 3925

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>A | US 2015/123017 A1 (YU SIYUAN [GB] ET AL) 7 mai 2015 (2015-05-07)<br>* alinéa [0075] - alinéa [0088]; figures 1(a)-(b) *<br>* alinéa [0097] - alinéa [0100]; figures 3(a)-(c) *<br>----- | 1<br><br>3,8,12 | INV.<br>G02B6/12<br>G02B6/125<br>G02B6/293<br><br>ADD.<br>G02B6/34 |
| A | US 5 299 045 A (SEKIGUCHI YOSHINOBU [JP]) 29 mars 1994 (1994-03-29)<br>* colonne 5, ligne 40 - colonne 7, ligne 35; figures 1, 2 *<br>----- | 1 | |
| A | US 7 333 692 B1 (MOSSBERG THOMAS W [US] ET AL) 19 février 2008 (2008-02-19)<br>* colonne 10, ligne 6 - colonne 14, ligne 45; figures 1, 3A, 3B, 4 *<br>----- | 1,3,6,7 | |
| A | US 2013/259420 A1 (YOSHIDA HARUHIKO [JP] ET AL) 3 octobre 2013 (2013-10-03)<br>* alinéa [0050] - alinéa [0057]; figure 6 *<br>* alinéa [0022] - alinéa [0032]; figures 1-2 *<br>----- | 1,2 | DOMAINES TECHNIQUES RECHERCHES (IPC)<br><br>G02B |

Le présent rapport a été établi pour toutes les revendications

| Lieu de la recherche | Date d'achèvement de la recherche | Examinateur |
|---|---|---|
| Berlin | 23 novembre 2021 | A. Jacobs |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P04C02)

**EP 3 936 912 A1**

## ANNEXE AU RAPPORT DE RECHERCHE EUROPEENNE
## RELATIF A LA DEMANDE DE BREVET EUROPEEN NO.

EP 21 18 3925

23-11-2021

| Document brevet cité au rapport de recherche | | Date de publication | Membre(s) de la famille de brevet(s) | | Date de publication |
|---|---|---|---|---|---|
| US 2015123017 | A1 | 07-05-2015 | GB | 2517344 A | 18-02-2015 |
| | | | US | 2015123017 A1 | 07-05-2015 |
| | | | WO | 2013179023 A1 | 05-12-2013 |
| US 5299045 | A | 29-03-1994 | AT | 170986 T | 15-09-1998 |
| | | | DE | 69226885 T2 | 01-04-1999 |
| | | | EP | 0495413 A1 | 22-07-1992 |
| | | | JP | 3067880 B2 | 24-07-2000 |
| | | | JP | H0587635 A | 06-04-1993 |
| | | | US | 5299045 A | 29-03-1994 |
| US 7333692 | B1 | 19-02-2008 | AUCUN | | |
| US 2013259420 | A1 | 03-10-2013 | JP | 5631917 B2 | 26-11-2014 |
| | | | JP | 2013205786 A | 07-10-2013 |
| | | | US | 2013259420 A1 | 03-10-2013 |

EPO FORM P0460